Europäisches Patentamt

European Patent Office

Office européen des brevets

(11) Veröffentlichungsnummer: **0 281 768**
**A2**

(12) **EUROPÄISCHE PATENTANMELDUNG**

(21) Anmeldenummer: 88101731.3

(22) Anmeldetag: 06.02.88

(51) Int. Cl.⁴: **B60H 1/34** , F24F 13/06

(30) Priorität: 07.03.87 DE 3707397

(43) Veröffentlichungstag der Anmeldung:
14.09.88 Patentblatt 88/37

(84) Benannte Vertragsstaaten:
DE ES FR GB IT NL SE

(71) Anmelder: PREH, Elektrofeinmechanische
Werke Jakob Preh Nachf. GmbH & Co.
Postfach 1740 Schweinfurter Strasse 5
D-8740 Bad Neustadt/Saale(DE)

(72) Erfinder: Bauer, Karl-Heinz
Lerchenstrasse 9
D-8740 Bad Neustadt/Saale(DE)

(54) **Luftausströmvorrichtung.**

(57) Bei einer Luftausströmvorrichtung ist in einem Gehäusekörper (1) eine Verschlußklappe (9) - schwenkbar gelagert. Diese ist mittels eines Bedienteils (14) vor eine Luftdurchtrittsöffnung (3) klappbar. Um zu vermeiden, daß die Verschlußklappe (9) in ihrer Öffnungsstellung in einem Luftaustrittsschacht (4) erheblichen Raum beansprucht, und um die Anzahl der nötigen Bauteile klein zu halten, ist die Verschlußklappe (9) im Querschnitt kreisringsegmentförmig ausgebildet. Die Schwenkachse der Verschlußklappe (9) liegt im Mittelpunkt des Radius der Kreisringsegmentform. Das Bedienteil (14) ist an die Verschlußklappe (9) angeformt.

Fig. 2

EP 0 281 768 A2

## Luftausströmvorrichtung

Die Erfindung betrifft eine Luftausströmvorrichtung einer Fahrzeugraum-Belüftungs-/Heizungs-/Klima-Anlage mit einem Gehäusekörper und einer an diesem schwenkbar gelagerten Verschlußklappe, die mittels eines Bedienteils um eine Schwenkachse vor eine Luftdurchtrittsöffnung des Gehäusekörpers diese - schließend klappbar ist.

Derartige Luftausströmvorrichtungen dienen der Einstellung der Luftzufuhr zum Fahrzeuginnenraum.

In dem DE-GM 85 35 924 ist eine Verschlußklappe für eine derartige Luftausströmvorrichtung beschrieben. Diese Verschlußklappe ist im wesentlichen plan ausgebildet. Ihre Schwenkachse verläuft im Bereich ihrer Mitte. Ein derartiger Aufbau bedingt eine vergleichsweise große Bautiefe, da im Gehäusekörper ein Freiraum vorgesehen sein muß, in den die Verschlußklappe in ihre Öffnungsstellung hineinschwenken kann. Bei dem DE-GM 85 35 924 entspricht die Tiefe des nötigen Freiraums der Länge der Verschlußklappe.

Eine Einrichtung zum wahlweisen Verbinden zweier Räume mit einem Luftführungskanal in einer Heiz-oder Klimaanlage von Kraftfahrzeugen beschreibt die DE-OS 32 26 438. Dort schwenkt eine T-förmige Stellklappe um ihre Führungsachse und öffnet bzw. schließt den Durchlaß zum Luftführungskanal.

Bei bekannten Luftausströmvorrichtungen (z.B. VW-Golf) wird die Verschlußklappe von dem Bedienteil über eine Hebelanordnung betätigt. Das Bedienteil und die Verschlußklappe sind dabei an separaten Lagerstellen gelagert. Ein derartiger Aufbau hat eine Vielzahl von Lagerstellen und Einzelteilen zur Folge. Dementsprechend aufwendig ist auch die Montage. Außerdem müssen besondere Maßnahmen getroffen sein, um die notwendige Stabilität zu gewährleisten.

Aufgabe der Erfindung ist es, eine Luftausströmvorrichtung der eingangs genannten Art vorzuschlagen, bei der die Verschlußklappe in Öffnungsstellung und in Schließstellung einen nur geringen Freiraum beansprucht und die Anzahl der nötigen Bauteile verringert ist.

Erfindungsgemäß ist obige Aufgabe bei einer Luftausströmvorrichtung der eingangs genannten Art dadurch gelöst, daß die Verschlußklappe im Querschnitt kreisringsegmentförmig ausgebildet ist, daß die Schwenkachse der Verschlußklappe im Mittelpunkt der Kreisringsegmentform liegt und daß das Bedienteil an der Verschlußklappe um die Schwenkachse schwenkbar angeordnet ist, wobei die Verschlußklappe und das Bedienteil als einstückiges Formteil ausgebildet sind und somit das Bedienteil die kreissegmentförmige Verschlußklappe im Abstand zu deren Schwenkachse hält.

Bei dieser Luftausströmvorrichtung ist die Verschlußklappe in ihrer Öffnungsstellung nicht in den Freiraum vor oder hinter der Luftdurchtrittsöffnung geklappt, sondern längs des Randes des Freiraums verschwenkt. Der Freiraum vor der Luftaustrittsöffnung steht damit für den Einbau einer Luftleitjalousie zur Verfügung. Dadurch ist eine geringe Bautiefe des Gehäusekörpers möglich.

Da das Bedienteil direkt an der Verschlußklappe angeordnet ist, brauchen nicht für die Verschlußklappe und das Bedienteil je eigene Lagerstellen vorgesehen zu sein. Außerdem entfallen Bauteile zur Übertragung der Bewegung des Bedienteils auf die Verschlußklappe, so daß sich für die Luftausströmvorrichtung der Erfindung die erforderliche Anzahl an Bauteilen mindert von mindestens vier, gemäß dem Stand der Technik, auf drei - Bedienteil mit Verschlußklappe, Gehäusekörper und Seitenwand. Der Bau-und Montageaufwand ist dadurch erheblich verringert.

Günstig ist auch, daß die Verschlußklappe weder aus der Öffnungsstellung noch aus der Schließstellung von der Luftströmung verstellbar ist. In der Öffnungsstellung steht die Klappe außerhalb des Querschnittes der Luftdurchtrittsöffnung. Sie wird dementsprechend nicht von der durchströmenden Luft beaufschlagt.

Vorteilhafte Ausgestaltungen der Erfindung ergeben sich aus den Unteransprüchen und der folgenden Beschreibung eines Ausführungsbeispiels.

In der Zeichnung zeigen:

Figur 1 eine Luftausströmvorrichtung in Ansicht längs der Linie I-I nach Figur 2,

Figur 2 einen Schnitt längs der Linie II-II nach Figur 1 und

Figur 3 einen Schnitt durch die Seite mit dem Bedienteil längs der Linie III-III nach Figur 2.

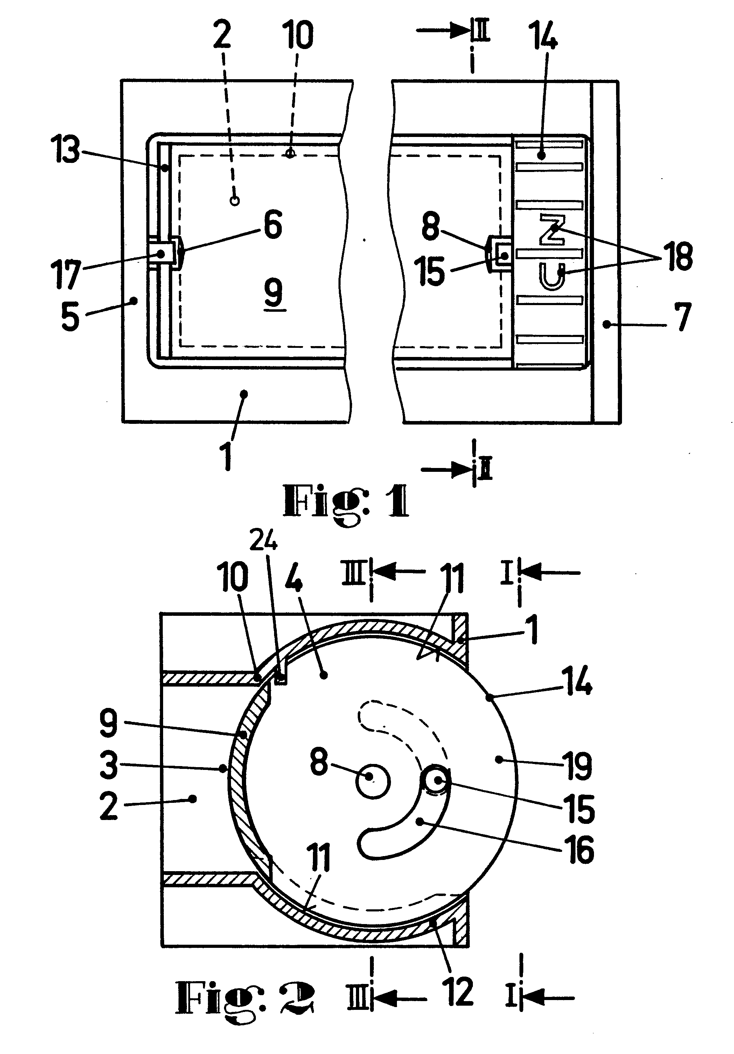

In den Figuren 1 bis 3 ist eine Luftausströmvorrichtung eines Kraftfahrzeugs ohne die in sie einsetzbare Luftleitjalousie dargestellt.

Ein Gehäusekörper (1) bildet einen Lufteinströmschacht (2) mit einer Luftdurchtrittsöffnung (3) und einen Luftaustrittsschacht (4). An der einen Seitenwand (5) des Gehäusekörpers (1) ist ein Lagerzapfen (6) vorgesehen. An einem der Seitenwand (5) gegenüberstehenden abnehmbaren Seitenwandteil (7) ist ein zweiter Lagerzapfen (8) ausgebildet.

Die Lagerzapfen (6, 8) bilden die Schwenkachse für eine Verschlußklappe (9). Diese ist im Querschnitt kreisringsegmentförmig bzw. teilzylindrisch gestaltet (vgl. Figur 2). Der Mittelpunkt des Radius dieser Kreisform fällt mit der Schwenkachse zusammen. Der die Luftdurchtrittsöffnung (3) umschließende Rand (10) der Luftdurchtrittsöffnung (3) ist der Form der Verschlußklappe (9) so angepaßt, daß diese in der in den Figuren gezeigten Schließstellung die Luftdurchtrittsöffnung (3) möglichst dicht abschließt und den Rand (10) übergreift.

Der Luftaustrittsschacht (4) ist an der Innenseite (11) seiner Wandung (12) teilzylindrisch entsprechend dem Radius der Verschlußklappe (9) geformt.

An der Verschlußklappe (9) ist ein Schenkel (13) ausgebildet, der auf dem Lagerzapfen (6) sitzt. An der Verschlußklappe (9) ist außerdem ein radförmiges Bedienteil (14) ausgebildet, dessen Radius dem Radius der Verschlußklappe (9) gleich ist und das in dem Luftaustrittsschacht (4) liegt und am Lagerzapfen (8) sitzt.

Das Bedienteil (14) überragt mit einem Teilbereich (19) den Gehäusekörper (1).

An dem Seitenwandteil (7) ist neben dem Lagerzapfen (8) ein weiterer Zapfen (15) ausgebildet. Dieser durchgreift einen teilkreisförmigen Schlitz (16) des Bedienteils (14). Dieser bildet dabei einen Anschlag für die Verdrehstellung des Bedienteils (14) und damit zugleich für die Schließstellung und die Öffnungsstellung der Verschlußklappe (9). Ein solcher Anschlag kann auch durch eine entsprechende Gestaltung der Innenseite (11) der Wandung (12), z.B. durch eine Anformung (24), geschaffen sein. In Figur 2 ist die Öffnungsstellung der Verschlußklappe (9) strichliert dargestellt.

Ein dem Zapfen (15) entsprechender weiterer Zapfen (17) ist an der Seitenwand (5) vorgesehen. Die Zapfen (15, 17) dienen der Lagerung der nicht näher dargestellten, in den Luftaustrittsschacht (4) einzusetzenden Luftleitjalousie.

Die Verschlußklappe (9), der Schenkel (13) und das Bedienteil (14) sind von einem einstückigen Kunststoff-Formteil gebildet. Zusammen mit dem Gehäusekörper (1) und dessen Seitenwandteil (7) besteht die Luftausströmvorrichtung - abgesehen von der Luftleitjalousie - aus nur drei Formteilen.

Das Bedienteil (14) ist hohl. Mittels einer an dem Seitenwandteil (7) angeordneten Lampe (20) läßt sich das Bedienteil (14) von innen beleuchten. Bedienseitig sind Öffnungen (18) vorgesehen, um die jeweilige Stellung der Verschlußklappe (9) beleuchtet erkennbar zu machen.

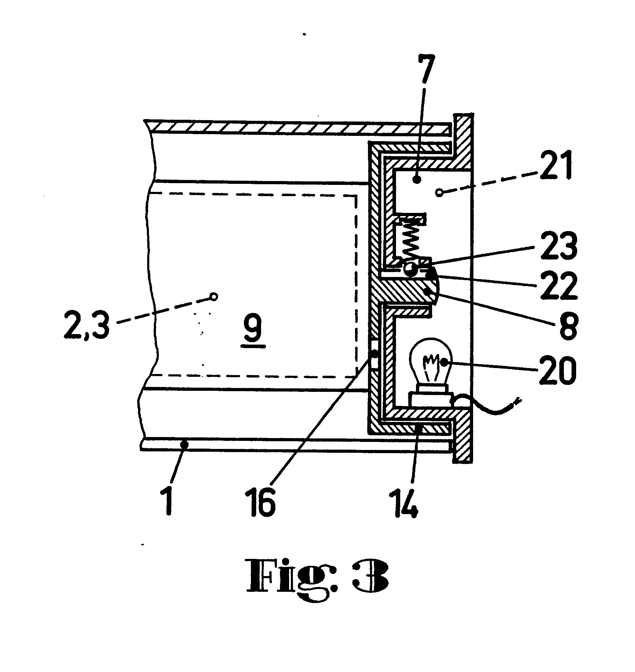

Ist der Lagerzapfen (8) am Bedienteil (14) und nicht an dem Seitenwandteil (7) befestigt (vgl. Figur 3), dann ist er in den Hohlraum (21) des Bedienteils (14) verlängert. Am Lagerzapfen (8) sind entsprechend der Schließstellung und der Öffnungsstellung der Verschlußklappe (9) Längsrillen (22) vorgesehen. An dem Seitenwandteil (7) ist ein federbelasteter Rastkörper (23) angeordnet, der in die eine oder andere Rille (22) rastet. Dadurch ist eine Rastung für die Schließstellung und die Öffnungsstellung der Verschlußklappe (9) gebildet.

In der in den Figuren dargestellten Schließstellung der Verschlußklappe (9) ist die Luftdurchtrittsöffnung (3) dicht abgeschlossen. Ein auf die Verschlußklappe (9) wirkender Strömungsdruck hat nicht die Tendenz, die Verschlußklappe (9) aus ihrer Schließstellung zu bringen, da die von den Lagerzapfen (6, 8) gebildete Schwenkachse in ihrer Projektion mittig zwischen den Längsrändern der Luftdurchtrittsöffnung (3) liegt.

Beim Öffnen der Verschlußklappe (9) mittels des Bedienteils (14) schwenkt die Verschlußklappe (9) in die in Figur 2 strichliert dargestellte Stellung. Sie verschiebt sich dabei reibungsfrei längs der Innenseite (11). Da nur zwei Lagerstellen vorgesehen sind, ist die Bewegung der Verschlußklappe (9) leichtgängig. Gegen Ende der Öffnungsbewegung rastet der Rastkörper (23) und stellt die Endstellung sicher. In der Öffnungsstellung beansprucht die Verschlußklappe (9) in dem Luftaustrittsschacht (4) praktisch keinen Raum, da sie eng an der Innenseite (11) liegt. Die Luftdurchtrittsöffnung (3) ist über ihren gesamten Querschnitt frei. Die durchströmende Luft hat nicht die Tendenz, die Verschlußklappe (9) aus ihrer Öffnungsstellung zu verstellen.

Von der einen Stellung in die andere Stellung wird das Bedienteil(14) um etwa 90° verstellt. Dementsprechend erstreckt sich die Kreisringsegmentform der Verschlußklappe (9) um etwa 90° verschwenkt. Um in der Schließstellung eine sichere Überdeckung des Randes (10) zu erreichen, ist der Rand (10) enger als 90° bezogen auf die Schwenkachse ausgelegt. Der Radius der Verschlußklappe (9) wird entsprechend dem gewünschten Radius des radförmigen Bedienteils (14) gewählt. Der Radius des Bedienteils (14) kann bedarfsweise auch größer als der Radius der Verschlußklappe (9) sein.

Bezugszeichenliste    02/87    Pt.    +    GM1

1 Gehäusekörper
2 Lufteinströmschacht
3 Luftdurchtrittsöffnung
4 Luftaustrittsschacht
5 Seitenwand
6 Lagerzapfen
7 Seitenwandteil
9 Verschlußklappe
10 Rand
11 Innenseite
12 Wandung
13 Schenkel

14 Bedienteil
15 Zapfen
16 Schlitz
17 Zapfen
18 Öffnungen
19 Teilbereich
20 Lampe
21 Hohlraum
22 Längsrillen
23 Rastkörper
24 Anformung

.Ansprüche

1. Luftausströmvorrichtung einer Fahrzeugraum-Belüftungs-/Heizungs-/Klima-Anlage, mit einem Gehäusekörper und einer an diesem - schwenkbar gelagerten Verschlußklappe, die mittels eines Bedienteils um eine Schwenkachse vor eine Luftdurchtrittsöffnung des Gehäusekörpers diese schließend klappbar ist,
dadurch gekennzeichnet,
daß die Verschlußklappe (9) im Querschnitt kreisringsegmentförmig ausgebildet ist, daß die Schwenkachse (6, 8) der Verschlußklappe (9) im Mittelpunkt des Radius der Kreisringsegmentform liegt und daß das Bedienteil (14) an der Verschlußklappe (9) um die Schwenkachse (6, 8) - schwenkbar angeordnet ist, wobei die Verschlußklappe (9) und das Bedienteil (14) als einstückiges Formteil ausgebildet sind.

2. Luftausströmvorrichtung nach Anspruch 1,
dadurch gekennzeichnet,
daß das Bedienteil (14) radförmig ausgebildet ist und den gleichen Radius aufweist wie die Kreissegmentform der Verschlußklappe (9).

3. Luftausströmvorrichtung nach Anspruch 2,
dadurch gekennzeichnet,
daß das radförmige Bedienteil (14) und damit die Verschlußklappe (9) an dem Gehäusekörper (1) - schwenkbar gelagert ist.

4. Luftausströmvorrichtung nach Anspruch 3,
dadurch gekennzeichnet,
daß am Gehäusekörper (1) ein Seitenwandteil (7) angebracht ist, an dem das radförmige Bedienteil (14) gelagert ist.

5. Luftausströmvorrichtung nach einem der vorhergehenden Ansprüche,
dadurch gekennzeichnet,
daß an der Verschlußklappe (9) ein Schenkel (13) einstückig angeformt ist, der an dem Gehäusekörper (1) dem Bedienteil (14) gegenüber schwenkbar gelagert ist.

6. Luftausströmvorrichtung nach einem der vorhergehenden Ansprüche,
dadurch gekennzeichnet,
daß am Seitenwandteil (7) ein Zapfen (15) angeordnet ist, der einen Schlitz (16) des radförmigen Bedienteils (14) durchgreift, dessen Enden Anschläge für die Bewegung der Verschlußklappe (9) bilden.

7. Luftausströmvorrichtung nach Anspruch 6,
dadurch gekennzeichnet,
daß ein dem Zapfen (15) entsprechender weiterer Zapfen (17) an der Seitenwand (5) ausgebildet ist und daß die Zapfen (15, 17) als Lager für eine in den Luftaustrittsschacht (4) einsetzbare Luftleitjalousie nutzbar sind.

8. Luftausströmvorrichtung nach einem der vorhergehenden Ansprüche,
dadurch gekennzeichnet,
daß im Gehäusekörper (1) ein Luftaustrittsschacht (4) ausgebildet ist, dessen Innenseite (11) entsprechend dem Radius der Verschlußklappe (9) zylindrisch ist.

0 281 768

**Fig. 1**

**Fig. 2**

PREH 02/87

**Fig. 3**